Europäisches Patentamt

European Patent Office

Office européen des brevets

(11) Veröffentlichungsnummer: **0 216 344**
**A1**

# (12) EUROPÄISCHE PATENTANMELDUNG

(21) Anmeldenummer: 86113027.6

(51) Int. Cl.⁴: **E01C 7/26**

(22) Anmeldetag: 22.09.86

(30) Priorität: 25.09.85 DE 3534107

(43) Veröffentlichungstag der Anmeldung:
01.04.87 Patentblatt 87/14

(84) Benannte Vertragsstaaten:
**AT DE FR IT NL**

(71) Anmelder: **Philipp, Klaus Ulrich**
**Am Burgfeld 19**
**D-5920 Berleburg(DE)**
Anmelder: **Hof, Michael**
**Am Hilgenacker 11**
**D-5920 Berleburg(DE)**

(72) Erfinder: **Philipp, Klaus Ulrich**
**Am Burgfeld 19**
**D-5920 Berleburg(DE)**
Erfinder: **Hof, Michael**
**Am Hilgenacker 11**
**D-5920 Berleburg(DE)**

(74) Vertreter: **Kossobutzki, Walter, Dipl.-Ing.**
**Waldstrasse 6**
**D-5419 Helferskirchen(DE)**

(54) **Verfahren zur Herstellung von Belägen, beispielsweise für Radfahr- und Gartenwege, Kinderspielplätze sowie zur Isolierung von Bauwerken.**

(57) Bei einem Verfahren zur Herstellung von Belägen, beispielsweise für Radfahr-und Gartenwege, Kinderspielplätze sowie zur Isolierung von Bauwerken, wird ein insbesondere als Abfall anfallender faseriger, körniger oder schnitzelartiger Füllstoff, beispielsweise Kunststoff, Gummi oder Textilien, mit einem aushärtenden Bindemittel vermischt und dieses Gemisch eingebaut.

Dabei wird aus dem Füllstoff und zumindest einem Teil des Bindemittels zunächst ein Gemisch industriell vorgefertigt, in transportablen Gebinden abgepackt, zwischengelagert und zur Einbaustelle transportiert. Dieses Gemisch wird erst an der Einbaustelle gegebenenfalls unter Zugabe des restlichen Bindemittels und/oder Zufuhr von Wärme einbaufertig aufbereitet und anschließend sofort eingebaut.

# Verfahren zur Herstellung von Belägen, beispielsweise für Radfahr-und Gartenwege, Kinderspielplätze sowie zur Isolierung von Bauwerken

Die Erfindung bezieht sich auf ein Verfahren zur Herstellung von Belägen, beispielsweise für Radfahr-und Gartenwege, Kinderspielplätze sowie zur Isolierung von Bauwerken, bei dem ein insbesondere als Abfall anfallender faseriger, körniger oder schnitzelartiger Füllstoff, beispielsweise Kunststoff, Gummi oder Textilien, mit einem aushärtenden Bindemittel vermischt und dieses Bindemittel eingebaut wird.

Es ist ein Verfahren zur Herstellung von Belägen für Kinderspielplätze und dergleichen bekannt, bei dem ein als Abfall anfallender faseriger, körniger oder schnitzelartiger Füllstoff, beispielsweise Abfälle von Autoreifen, Dichtungen, Schuhsohlen oder dergleichen zusammen mit einem aushärtendem Bindemittel in einem verhältnismäßig großen Mischer industriell vermischt werden. Dieses Gemisch wird anschließend in besondere Formwerkzeuge eingefüllt und härtet unter Druck und Temperatur aus. Die dabei beispielsweise entstehenden, elastischen Platten werden auf einem besonderen Sandbett auf Kinderspielplätzen lose verlegt. Im Bereich von Pfosten, Stützen oder dergleichen müssen diese Platten ausgeschnitten werden. Die Herstellung derartiger Beläge ist mit einem ver hältnismäßig hohen Aufwand verbunden, da das zur Verarbeitung kommende Abfallprodukt fraktioniert und gereinigt werden muß. Die anschließende Konvektion kann nämlich bei der Verunreinigung durch mineralische und metallische Fremdkörper nur bedingt erfolgen, da dieselben die hochwertigen Maschinenanlagen und Formwerkzeuge in ihrer Standzeit erheblich beeinträchtigen.

Zur Herstellung von Belägen, beispielsweise für Sportanlagen und Wege ist es ferner bekannt, den faserigen, körnigen oder schnitzelartigen Füllstoff mit dem aushärtenden Bindemittel ebenfalls in Maschinenanlagen zu mischen und anschließend sofort mittels im Straßenbau bekannten Fertigern unter Druck einzubauen. Eine einigermaßen wirtschaftliche Herstellung dieser Beläge kann nur dann vorgenommen werden, wenn die herzustellenden Beläge mindestens eine Fläche von 400 m² aufweisen, wie dies beispielsweise bei Handballfeldern, Tennisplätzen und Laufbahnen der Fall ist.

Die beiden vorgenannten Verfahren zur Herstellung dieser Beläge erfordern einen verhältnismäßig hohen Investitionsaufwand, der sich auf den Preis des Endproduktes nachteilig auswirkt. Dieser verhältnismäßig hohe Preis hat zur Folge, daß das Einsatzgebiet solcher Beläge begrenzt ist.

Der Erfindung liegt deshalb die Aufgabe zugrunde, ein Verfahren zur Herstellung von Belägen, beispielsweise für Radfahr-und Gartenwege, Kinderspielplätze sowie zur Isolierung von Bauwerken zu schaffen, welches ohne großen Investitionsaufwand durchführbar ist und damit den Einsatz solcher Beläge für jedermann möglich, insbesondere aber erschwinglich macht.

Zur Lösung dieser Aufgabe wird bei dem Verfahren gemäß der Erfindung vorgeschlagen, daß aus dem Füllstoff und zumindest einem Teil des Bindemittels zunächst ein Gemisch industriell vorgefertigt und in transportablen Gebinden abgepackt wird. Nach einer Zwischenlagerung wird dieses Gemisch in den Gebinden zur Einbaustelle transportiert und erst dort gegebenenfalls unter Zugabe des restlichen Bindemittels und/oder durch Zufuhr von Wärme einbaufertig aufbereitet und anschließend sofort eingebaut. Für das Aufbereiten des einbaufertigen Gemisches ist ein einfacher Behälter und ein Handmischgerät ausreichend. Das Verteilen des einbaufertigen Gemisches kann mit einem Rechen oder mit einer Kelle erfolgen, wobei die damit erzielbare, leichte Verdichtung ausreichend ist. Das einbaufertige Gemisch kann mittels des Handwerkzeuges leicht in jede Ecke und um jedes vorstehende Teil verteilt werden, so daß ein im wesentlichen einstückiger Belag entsteht. Besondere Formen, insbesondere Formwerkzeuge, sind für die Herstellung der Beläge nicht erforderlich. Bedarfsweise kann eine einfache Schalung aus Metall oder aus Holz eingesetzt werden.

Weitere Merkmale des Verfahrens nach der Erfindung sind in den Ansprüchen 2 -13 offenbart.

Das Verfahren gemäß der vorliegenden Erfindung wird nachfolgend anhand von einigen Ausführungsbeispielen näher erläutert.

Beispiel I

I00 Gewichtsteile Gummimehl, Gummigranulat oder Gummischnitzel, die aus Abfällen von Autoreifen oder dergleichen hergestellt wurden, werden mit I5 Gewichtsteilen Polyol und etwa 0,I -I0 Gewichtsteile Beschleuniger in einer Mischanlage kontinuierlich oder diskontinuierlich gemischt. Dieses Ge misch wird in transportablen Gebinden, beispielsweise Polyäthylenbeutel oder feste Behälter aus Metall oder Kunststoff mit einem Gewicht von etwa 30 -50 kg abgepackt. Dabei ist das Gebinde so ausgebildet, daß sich entweder in dem Polyäthylenbeutel ein kleiner Beutel oder in dem festen Behälter ein flaschenartiges Gebinde befindet, welches etwa 5 Gewichtsteile Isocyanat enthält. Dieses Gebinde kann bedarfsweise in Lagern und/oder Verkaufsräumen zwischengelagert werden. An der Einbaustelle, beispielsweise einem Gartenweg oder einer Baumscheibe, die bedarfsweise mit einer Schalung versehen ist, wird das vorgefertigte Gemisch in einen festen Behälter gefüllt und das getrennt abgefüllte Isocyanat zugegeben. Mittels eines Handmischers wird nun das Isocyanat mit dem vorgefertigten Gemisch vermischt und anschließend auf die Einbaustelle geschüttet. Mittels einer Kelle oder einem Rechen wird nun dieses Gemisch in einer Dicke von etwa 10 -50 mm gleichmäßig verteilt, leicht verdichtet und an seiner Oberfläche geglättet. Nach einer Zeit von etwa 2 -6 Stunden ist dieses Gemisch ausgehärtet und somit der Gartenweg oder die Baumscheibe fertig. Die Aushärtezeit ist dabei sehr stark von der Außentemperatur abhängig. Auch der Anteil des Bindemittels, des Beschleunigers und des Härters sind für die Aushärtezeit von Bedeutung.

## Beispiel 2

100 Gewichtsteile mehl-und/oder granulatartiges Ethylen-Vinyl-Acetat, das beispielsweise aus alten Schuhsohlen gewonnen wird, wird mit 20 Gewichtsteilen Natur-Latex in einer Mischanlage gemischt und anschließend in transportable Gebinde abgepackt. Den Gebinden werden entweder in einem kleinen Beutel oder in einem anderen, gesonderten Behälter 0,5 Gewichtsteile eines Emulgators derart zugegeben, daß eine Reaktion des Emulgators mit dem Natur-Latex ausgeschlossen ist. An der Einbaustelle, beispielsweise einer zu schützenden Dachfläche oder einer zu isolierenden Bodenfläche wird das vorgefertigte Gemisch in einen Behälter gefüllt und nach Zugabe des Emulgators mit demselben vermischt. Nach einer vorgegebenen Mischzeit wird das fertige Gemisch auf die Einbaustelle ausgeschüttet und unter geringfügiger Verdichtung gleichmäßig verteilt und geglättet. Die Dicke des Belages kann auch hier etwa 10 -50 mm betragen.

## Beispiel 3

100 Gewichtsteile granulat-und/oder mehlartiges, technisches Gummi, das beispielsweise aus alten Dichtleisten oder dergleichen gewonnen wird, wird mit etwa 10 Gewichtsprozent eines Prepolymers vermischt und anschließend sofort unter Vakuum abgepackt. An der Einbaustelle wird die Packung bzw. das Gebinde nur geöffnet und das Gemisch auf die Einbaustelle verteilt, geringfügig verdichtet und geglättet. Ein solches Gemisch kann beispielsweise als Bodenbelag für Kinderspielplätze verwendet werden. Die Dicke des Belages kann auch hier 10 -50 mm betragen.

## Beispiel 4

100 Gewichtsteile Bitumen werden in einer Mischanlage über ihre Schmelztemperatur erhitzt und mit etwa 50 Gewichtsteilen Gummischnitzeln, oder Gummigranulat, die aus Abfall von technischem Gummi gewonnen wurden, vermischt und im heißen Zustand in transportable Gebinde, beispielsweise Eimer, abgefüllt. Nach dem Erkalten dieses Gemisches können die Eimer entweder zwischengelagert oder sofort zur Baustelle transportiert werden. Hier wird das Gemisch erneut erhitzt, auf die Einbaustelle aufgeschüttet, verteilt und glatt gestrichen. Ein Verdichten ist hier nicht mehr erforderlich.

In Abänderung der erläuterten Ausführungsbeispiele ist es möglich, als Füllstoff für die Beläge auch Polyäthylenabfälle, PVC-Abfälle, Textilabfälle, Teppichabfälle sowie Abfälle von Polyurethanschaum oder auch mineralische Produkte, beispielsweise Blähschiefer, zu verwenden. Ferner ist es möglich, als Füllstoffe auch solche Stoffe bzw. Rohstoffe, beispielsweise EPDM, einzusetzen, die eigens für die Durchführung dieses Verfahrens hergestellt werden. Dem vorzufertigenden Gemisch kann ein Farbstoff zugegeben werden, so daß sich farblich unterschiedliche Beläge gestalten lassen. Ferner ist es möglich, die Oberfläche der Beläge mit einer besonderen Schicht, beispielsweise einer PUR-Beschichtung, zu veredeln.

## Ansprüche

1. Verfahren zur Herstellung von Belägen, beispielsweise für Radfahr-und Gartenwege, Kinderspielplätze sowie zur Isolierung von Bauwerken, bei dem ein insbesondere als Abfall anfallender faseriger, körniger oder schnitzelartiger Füllstoff, beispielsweise Kunststoff, Gummi oder Textilien, mit einem aushärtenden Bindemittel vermischt und dieses Gemisch eingebaut wird,

dadurch gekennzeichnet,

daß aus dem Füllstoff und zumindest einem Teil des Bindemittels zunächst ein Gemisch industriell vorgefertigt, in transportablen Gebinden abgepackt, zwischengelagert und zur Einbaustelle transportiert wird und daß dieses Gemisch erst an der Einbaustelle gegebenenfalls unter Zugabe des restlichen Bindemittels und/oder Zufuhr von Wärme einbaufertig.aufbereitet und anschließend sofort eingebaut wird.

2. Verfahren nach Anspruch I,

dadurch gekennzeichnet,

daß dem Füllmaterial 8 -30 Gewichtsprozent Bindemittel zugemischt werden.

3. Verfahren nach Anspruch I und 2,

dadurch gekennzeichnet,

daß dem vorzufertigenden Gemisch ein Teil eines Reaktionsharzes und dem einzubauenden Gemisch der restliche Teil des Reaktionsharzes bzw. ein Härter zugesetzt wird.

4. Verfahren nach Anspruch 3,

dadurch gekennzeichnet,

daß dem vorzufertigenden Gemisch Polyol und dem einzubauenden Gemisch Isocyanat zugegeben wird.

5. Verfahren nach Anspruch 4,

dadurch gekennzeichnet,

daß dem vorzufertigenden Gemisch, auf das Bindemittel bezogen, 30 -90 Gewichtsprozent Polyol zugegeben werden.

6. Verfahren nach Anspruch 4,

dadurch gekennzeichnet,

daß dem einzubauenden Gemisch, auf das Bindemittel bezogen, I0 -70 Gewichtsprozent Isocyanat zugegeben werden.

7. Verfahren nach einem der Ansprüche I bis 2,

dadurch gekennzeichnet,

daß dem vorzufertigenden Gemisch Natur-oder Synthese-Latex und dem einzubauenden Gemisch ein Emulgator zugegeben wird.

8. Verfahren nach Anspruch I,

dadurch gekennzeichnet,

daß dem vorzufertigenden Gemisch Bitumen als Bindemittel zugegeben wird.

9. Verfahren nach einem der Ansprüche I bis 2,

dadurch gekennzeichnet,

daß dem vorzufertigenden Gemisch ein unter Umgebungsluft härtendes Harz als Bindemittel zugesetzt und das vorgefertigte Gemisch unter Vakuum verpackt, gelagert und zur Einbaustelle transportiert wird.

I0. Verfahren nach Anspruch 9,

dadurch gekennzeichnet,

daß als Harz ein lösungsmittelfreies, niedrigviskoses Einkomponenten-Bindemittel auf Polyurethanbasis zugesetzt wird.

II. Verfahren nach einem der Ansprüche I -9,

dadurch gekennzeichnet,

daß dem einzubauenden Gemisch ein Beschleuniger zugegeben wird.

I2. Verfahren nach Anspruch II,

dadurch gekennzeichnet,

daß der Beschleuniger bereits dem vorzufertigenden Gemisch zugegeben wird.

I3. Verfahren nach einem der Ansprüche I -II,

dadurch gekennzeichnet,

daß dem vorzufertigenden Gemisch ein Farbstoff zugegeben wird.

## DOCUMENTS CONSIDERED TO BE RELEVANT

EP 86113027.6

| Category | Citation of document with indication, where appropriate, of relevant passages | Relevant to claim | CLASSIFICATION OF THE APPLICATION (Int. Cl.4) |
|---|---|---|---|
| X | DE - B - 1 409 833 (RÖHM GMBH)<br>* Totality * | 1-3,7-9,11-13 | E 01 C  7/26 |
| Y | | 2-7,9-13 | |
| X | AT - B - 241 513 (RÖHM & HAAS G.M.B.H.)<br>* Totality * | 1-3,7-9,11-13 | |
| Y | | 2-7,9-13 | |
| X | AT - B - 324 396 (NOWAK) | 1,2,8 | |
| Y | * Totality, especially page 2, lines 34-46; page 3, lines 44-49 * | 2-8,11-13 | |
| X | US - A - 2 347 233 (ABERNATHY)<br>* Totality, especially page 3, right column, line 31ff * | 1-3,7-9,11-13 | |
| Y | | 2-8,11-13 | TECHNICAL FIELDS SEARCHED (Int. Cl.4) |
| X | DE - A1 - 3 011 654 (LEONHARD SCHMID KG)<br>* Totality, especially page 5, lines 17-26 * | 1,2 | E 01 C  7/00<br>E 04 F 15/00 |
| X,A | GB - A - 1 155 634 (ESSO RESEARCH)<br>* Totality * | 1,2,8 | |
| Y | US - A - 3 272 098 (BUCHHOLTZ)<br>* Totality, especially column 2, lines 27-52 * | 2-7,9-13 | |

The present search report has been drawn up for all claims

| Place of search | Date of completion of the search | Examiner |
|---|---|---|
| VIENNA | 02-12-1986 | SAMSEGGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

# EUROPEAN SEARCH REPORT

European Patent Office

Application number

| Category | Citation of document with indication, where appropriate, of relevant passages | Relevant to claim | CLASSIFICATION OF THE APPLICATION (Int. Cl.4) |
|---|---|---|---|
| | **DOCUMENTS CONSIDERED TO BE RELEVANT** | | EP 86113027.6 |
| Y | AT - B - 368 782 (PREMM GES.M.B.H.)<br>* Totality * | 2-7,9-13 | |
| Y | DE - A - 1 594 803 (TEERBAU GESELL-SCHAFT)<br><br>* Totality, especially page 3, line 11; page 10, lines 10, 11 * | 2-8,11-13 | |
| Y | DE - A - 1 594 805 (TEERBAU GESELL-SCHAFT)<br><br>* Totality, especially page 3, line 15; page 9, line 4 * | 2-8,11-13 | |
| Y | GB - A - 1 459 042 (IMPERIAL CHE-MICAL INDUSTRIES LTD.)<br><br>* Totality, especially page 2, lines 4-8 * | 4-6,10 | TECHNICAL FIELDS SEARCHED (Int. Cl.4) |

The present search report has been drawn up for all claims

| Place of search | Date of completion of the search | Examiner |
|---|---|---|
| VIENNA | 02-12-1986 | SAMSEGGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82